# EUROPEAN PATENT SPECIFICATION

(11) **EP 0 771 312 B1**
(45) Date of publication and mention of the grant of the patent: **23.12.1998**
(21) Application number: 95923257.0
(22) Date of filing: 06.06.1995
(51) Int. Cl.: C03B 9/193, C03B 9/29, C03B 7/16

(54) **FORMATION OF GLASS ARTICLES**
HERSTELLUNG VON GLASGEGENSTÄNDE
FORMATION D'ARTICLES EN VERRE

(30) Priority: 11.06.1994 GB 9411776; 04.04.1995 GB 9506977
(43) Date of publication of application: 07.05.1997
(73) Proprietor: Demaglass Technology Limited, Chesterfield, Derbyshire S41 8LD (GB)
(72) Inventor: SMITH, Roger, Andrew, Harworth, Doncaster DN11 8LL (GB); ORWIN, David, William, Chesterfield S40 3PF (GB); SADDOO, Leslie, Washington, Nottinghamshire S81 0UH (GB)
(74) Representative: Lunt, Mark George Francis
(86) International application number: EP9502203
(87) International publication number: WO9534513

(56) References cited:
- DE-A- 1 471 836
- DE-A- 3 525 740
- US-A- 1 878 521
- US-A- 2 645 059
- US-A- 3 142 552
- US-A- 3 434 820
- US-A- 4 062 668

## Description

### FIELD OF THE INVENTION

This invention relates to the formation of glass articles, and more particularly to a novel machine for producing glass articles which has improved versatility and is of lower cost.

### BACKGROUND TO THE INVENTION

Glass tableware is commonly manufactured on a paste mould machine of the press-and-blow or blow-and-blow type. The machine comprises a plurality of heads which are continuously rotated on a carousel. Each head comprises a blank mould and a blow mould, and produces a moulded article per revolution of the carousel. The machine uses a gob single feeder, which feeds each of the one-piece blank moulds as they travel by. Delivery is accomplished by an oscillating delivery chute which travels with each blank mould for a short distance, then reverses and falls back to travel again with the succeeding blank mould.

As each blank mould passes the gob feeder chute, a gob of glass falls into the one-piece blank mould. The blank mould then moves on and rises until it is seated in a neck ring. In the press-and-blow type machine, a plunger is lowered through the neck ring to press the glass gob into the shape of a tapered glass parison, within the solid iron blank mould. The blank mould and plunger retract to their original positions leaving the parison suspended by the neck ring which is rotated in a horizontal plane. The surface of the parison re-heats, and the parison itself elongates, until it assumes a shape suitable to enter the blow mould. The blow mould is in two halves which are pivotally mounted and can rotate about vertical axes from an open to a closed position. Each of the blow moulds is lined with a cork paste, and wetted by water sprays. The water is shut off, the two halves of the blow mould rotate to close the mould, and blowing occurs as the parison is still rotating. When blown, the glass article cools until the blow mould opens and tongs remove the glass article from the neck ring. Finally the top or moil is burnt off to produce the finished article.

It will be apparent that the paste mould machine is complex and extremely expensive, but it has the advantage that articles with a high surface finish are produced without any seam marks. Nevertheless the investment required in such machines has limited their use to the larger glass manufacturing companies.

Another disadvantage of the paste mould machine is that the blank moulds travel in both a horizontal and a vertical plane, respectively for receiving the glass gob from the feeder and for pressing the parison. The possibility of several degrees of freedom increases the risk that wear in the handling equipment will lead to decreased accuracy in the pressing of the parison.

In addition, because the two halves of the blow mould are pivotally mounted, in a "clam-shell" type arrangement, it is possible for the parison to become pinched between the two halves of the blow mould as they close, if the parison is not accurately sized and positioned. The clam-shell operation of the blow mould also limits the size of ware which can be produced, and requires a relatively large amount of space for the moving parts.

Another known machine, particularly for producing bottles and jars, is the IS (independent section) machine in which each section is independent and comprises a complete bottle or jar manufacturing unit. The sections are lined up side-by-side, and, as there is no rotation, the moulds have only to open and close. Each section has it's own gob delivery system, which is controlled by the section timing mechanism. In operation, the blank mould is moved horizontally until it is positioned under a stationary guide funnel which is connected to the gob delivery system. The gob drops through the guide funnel into the blank mould and settles at the bottom of the mould. The mould is then retracted and an air-operated plunger rises up from the bottom of the mould and pushes the glass into an inverted parison. As the blank mould opens, the inverted parison is held in a neck ring attached to a transfer arm. The neck ring swings the parison 180 degrees in a vertical plane to a position over a blow mould which is in the act of closing. The blow mould is again in two halves, pivotally mounted and rotatable about vertical axes between an open and a closed position in a clam-shell type arrangement. Just as the blow mould closes all the way, the neck ring opens, releasing the parison and allowing it to drop into the correct position within the blow mould. The neck ring returns to its original relationship with the blank mould and the mould cycle is repeated. During transfer, the parison is held by its top or finish in the neck ring, but does not otherwise touch the mould metal, allowing re-heat of the skin or surface of the parison to take place. The parison elongates after it is inverted, and ultimately the hollow glass article is blown by a blow-head situated on the top of the blow mould. After cooling, the hollow glass article is removed by take-out tongs.

The IS machine can have fewer sections than there are heads of the paste mould machine, and the number of sections can be expanded as production requirements increase. Nevertheless the gob delivery system is complicated, and becomes more so with an increasing number of sections. The IS machine also has the same disadvantages as the paste mould machine in that wear in the blank mould moving parts can lead to inaccurate pressing of the parison, and the clam-shell arrangement of the blow mould halves can give rise to pinching of the parison. In addition, the production rate for an individual section is dependent upon the blow moulding cycle, which is substantially longer than the press moulding cycle. A further disadvantage is that the IS machine does not rotate the parison and leaves a seam line from the press moulding stage. The surface quality of an article produced on the IS machine is also usually inferior to that of the paste mould machine.

It is apparent from the above that there is a need for a machine for the production of hollow glass articles which can achieve the surface quality of the paste mould machine and the versatility of the IS machine but with a lower capital expenditure, and which can provide an improved accuracy in pressing and blowing of the parison.

US-A-4062668 discloses a hollow glass article making machine having multiple stations, in a first of which a blank is pressed into a parison, and in second ones of which, the parison is blown into finished articles. A turret transfers the various stages of the product between the stations and a final ejection station, releasing the articles each time. Also the turret moves in three dimensions. The machine is primarily directed at bottle making.

US-A-3142552 describes a machine for making optical quality glassware and involves a stationary product which is first pressed and subsequently blown in moulds which move around the product. A movable glass gob deflector is also shown, as well as rotation of the parison after press forming.

EP-A2-0373769 discloses a mould mechanism opening about two parallel spaced axes.

### SUMMARY OF THE INVENTION

According to the present invention there is provided a glass forming apparatus for the production of hollow glass articles which comprises:
a first station comprising a blank mould and a plunger cooperable therewith adapted to form a glass gob into a hollow blank;
a transfer means adapted to transfer the hollow blank from the first station to a second station; and
a plurality of second stations each adapted to receive a hollow blank from the first station and comprising a blow mould and blowing means cooperable therewith to form the blank into a blow moulded glass hollow article;
characterised in that, the transfer means comprises elongate arms, one for each second station, which are reciprocally rotatable, each arm having a neck means adapted to receive the moil of a hollow glass blank formed by the action of the plunger on the glass gob, the elongate arm being arranged to rotate the hollow blank about its vertical axis whilst the blank is being transferred from the first station to one of said second stations, and to hold the hollow blank by the neck means during said transfer and during blowing of the moulded glass article.

Preferably, the blow moulded glass article is not released from the elongate arm of the transfer means until the arm has been rotated to an eject position.

Preferably, a retractor gob deflector is provided which is adapted to receive a glass gob from a gob feeder and to deflect the glass gob into the blank mould, the gob deflector being retractable from a first gob deflecting position in which it is situated between the blank mould and the plunger to a second position in which the gob deflector does not interfere with the movement of the blank mould or the plunger in the formation of the hollow blank.

Preferably, the blow mould comprises two or more mould parts and is adapted to open or close by relative linear movement of the two or more mould parts.

Preferably, the blank mould is of unitary construction and is mounted for reciprocal vertical motion, the plunger preferably being arranged vertically above the blank mould and mounted for reciprocal vertical motion.

The blow mould may be a paste mould. Preferably, there is one first station, and two second stations.

The gob deflector may be in the form of an elongate downwardly depending metal channel which is positioned, in gob deflecting operation, such that its lower end is substantially vertically above the open mouth of the blank mould.

Ideally, the blank mould and the plunger are movable only in a vertical direction, and the elongate arms are movable only in a horizontal plane, in normal operation. This removes a degree of freedom of movement for the mould and plunger and improves the accuracy of the pressing of the glass blank or parison. Registration of the parison with the blow mould is also improved.

Preferably, the blow mould comprises two mould halves and adapted to open and close by relative linear movement of the said mould halves on linear slides.

The invention also provides a method of forming a hollow glass article, in which there is used a glass forming apparatus as defined above.

The glass forming apparatus of the invention may be used to produce hollow glass articles such as, for example, glasses, tumblers, mugs, cups and other tableware.

The gob feeder can, for example, convey a glass gob from a forehearth to the blank mould via a delivery chute and the gob deflector.

The gob deflector is preferably in the form of an elongate downwardly depending metal channel which is positioned, in gob deflecting operation, such that its lower end is substantially vertically above the open mouth of the blank mould. In this position, it would interfere with the relative vertical movement of the blank mould and the plunger in the press moulding cycle. Therefore, the gob deflector moves, preferably in a horizontal direction, to a position in which it cannot interfere with the vertical travel either of the plunger or of the blank mould.

The neck means comprises a neck ring, which forms part, usually the top, of the blank mould and receives a portion of the hollow glass blank or parison which is formed by the action of the plunger on the glass gob. When the blank mould is opened to release the blank, a top portion of the blank, ie the moil, is retained within the neck ring. The neck ring is thereby able to convey the blank suspended from the moil to the blow mould. The neck ring may be in two or more, and preferably four, sections.

Preferably, rotation of the parison during transfer is achieved by rotating the neck means about its vertical axis. The time taken for the transfer is preferably sufficient to allow re-heating of the blank or parison to take place.

Preferably the blow mould is in two halves and the mould is opened and closed by movement of the two halves on linear slides. Preferably the blow mould is a paste mould which, for example, can be lined with a cork paste and wetted with water sprays.

### BRIEF DESCRIPTION OF THE DRAWINGS

A preferred embodiment of a glass forming apparatus according to the invention will now be described with reference to the accompanying Drawings in which:
Figure 1 shows a glass forming apparatus according to the invention in plan view;
Figure 2 shows a sectional side elevation of the apparatus of Figure 1, taken along the line A-A illustrating the gob deflector in its retracted position;
Figure 3 shows a sectional side elevation of the apparatus of Figure 1, taken along the line A-A, with the gob deflector in its extended position;
Figure 4 shows the transfer mechanism of the apparatus of Figure 1, including the neck ring assembly, in plan view; and

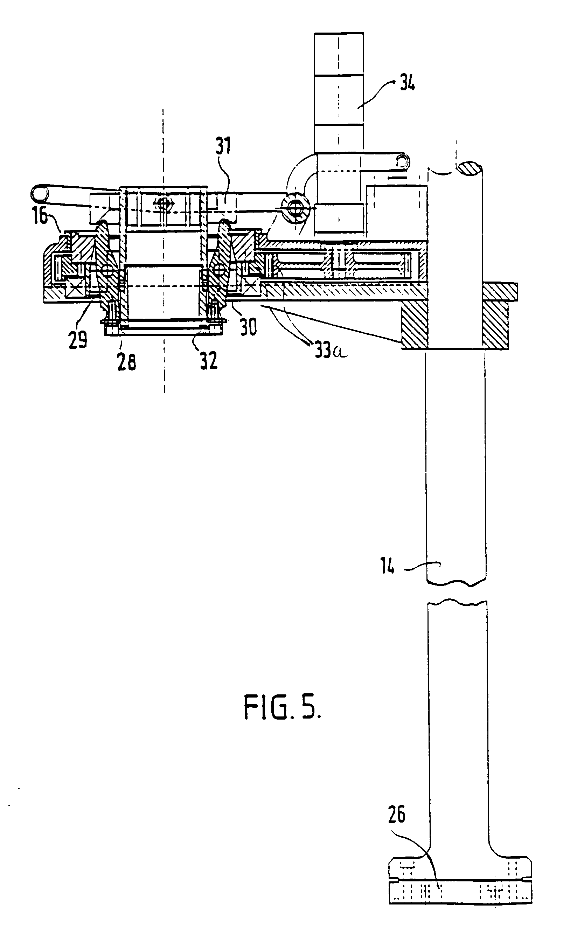

Figure 5 shows the transfer mechanism of Figure 4 in sectional side elevation.

### DETAILED DESCRIPTION OF THE PREFERRED EMBODIMENT

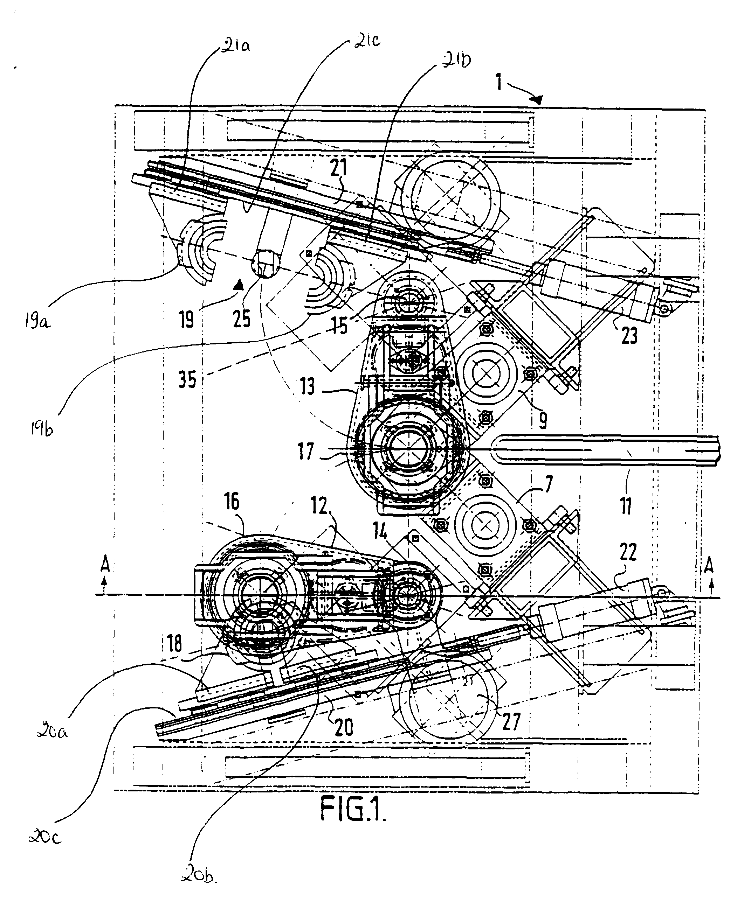

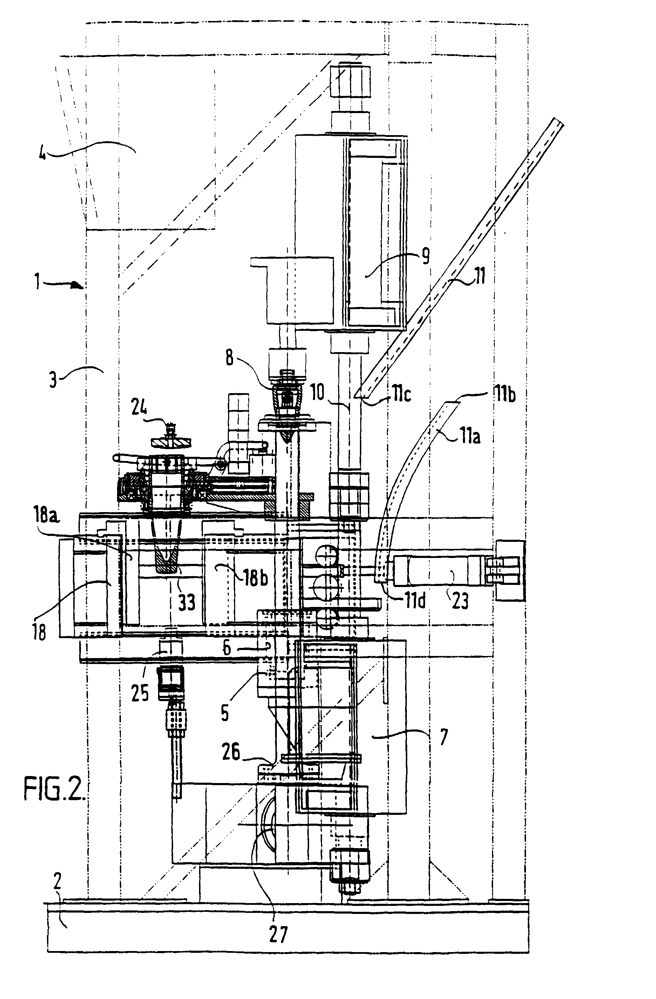

Referring firstly to Figures 1 and 2, the glass forming apparatus, illustrated generally at 1, comprises a base 2 and a frame 3. Mounted on the frame 3 is a control panel 4 for controlling and synchronising the various actions of the machine components. In an alternative design (not shown) the control panel can be free-standing, or separately mounted.

The press mould station comprises a one-piece blank mould 5, having a contoured internal surface 6, which can be raised and lowered in a vertical plane by means of a blank mould raising cylinder 7. Co-operating with the blank mould 5 is a plunger 8, mounted upon a press cylinder 9, which is itself reciprocally mounted upon a vertical rod 10.

The plunger 8 is positioned centrally above the blank mould 5, and both the plunger and the blank mould can travel only along a central vertical axis and are not permitted any horizontal or sideways movement in normal operation. This greatly obviates any inaccuracies in alignment caused by wear of moving parts.

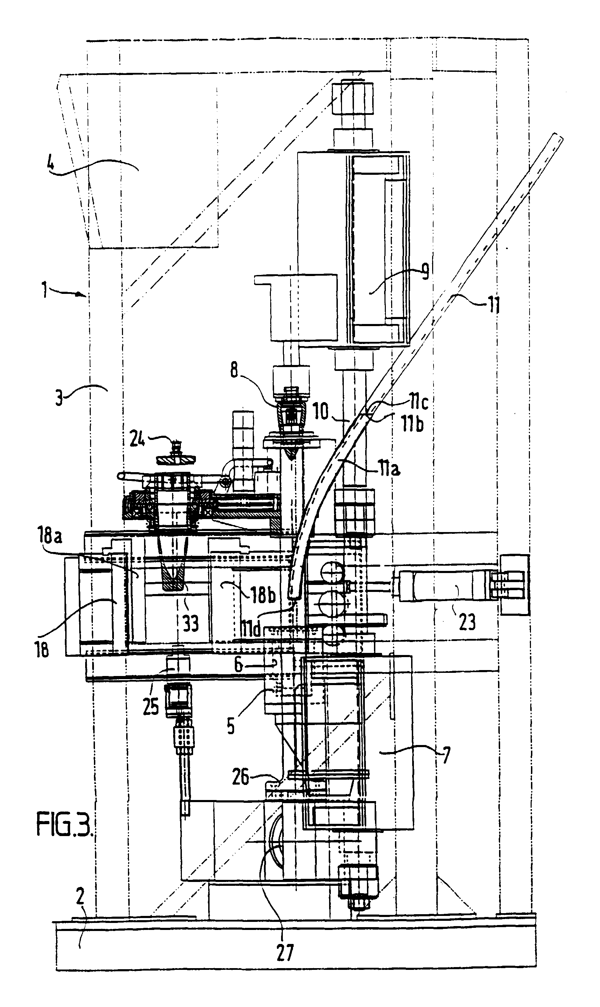

Leading from the gob delivery system (not shown) is a delivery chute 11 comprising an inclined open channel which is fixed in position above and to one side of the blank mould 5 so that it does not interfere with the vertical travel of the plunger 8 or the blank mould 5. Beneath the delivery chute is a retractable gob deflector 11a, which comprises a curved downwardly depending open channel. The deflector lla is illustrated in Figure 2 in its retracted position, in which it does not obstruct the vertical travel of the plunger 8 or the blank mould 5. The gob deflector 11a can travel between the retracted position illustrated in Figure 2 and an extended position illustrated in Figure 3. In the extended position, the top of the gob deflector channel 11b connects with the bottom llc of the delivery chute 11, and the bottom of the gob deflector channel 11d is positioned over the blank mould 5. The gob deflector is moved between its retracted and extended portions by a cylinder (not shown).

The apparatus is provided with a pair of transport arm mechanisms 12 and 13 which are mounted upon vertical axles 14 and 15 about which they can be reciprocally rotated in a horizontal plane. Each transport arm mechanism carries a neck ring assembly 16, 17 for the transporting of the glass blank or parison 33 from the press mould 5 to the blow moulds 18 and 19.

The blow moulds 18, 19 each comprise two halves 18a, 18b and 19a, 19b, which are slidably mounted upon carriage mechanisms 20 and 21, each of which incorporates a mould opening and closing mechanism activated by cylinders 22 and 23. The carriage mechanisms 20 and 21 comprise sliders 20a, 20b, 21a and 21b which are supported for lateral movement on elongate horizontally directed guide channels 20c and 21c.

The blow moulds are each provided with a blow head 24, and an optional foot forming cylinder 25.

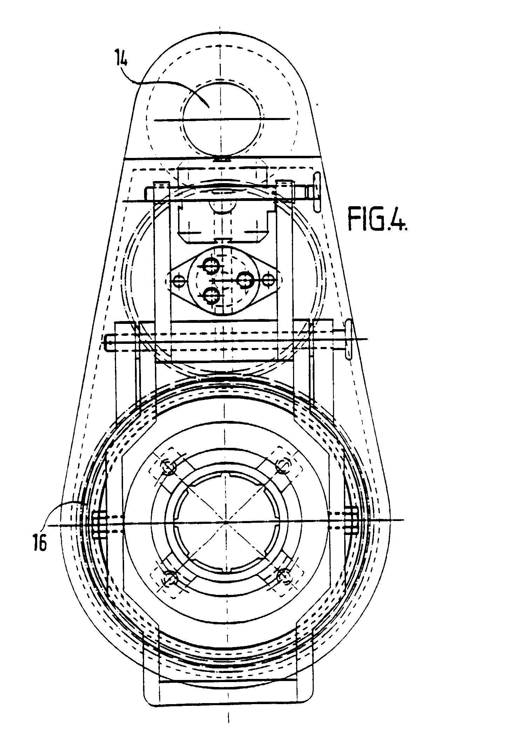

The construction of the transport arm mechanism 12 is illustrated in more detail in Figures 3 and 4. Transport arm mechanism 13 is of course an identical mirror image. The vertically arranged axle 14 is mounted upon a plinth 26 which is rotatable by means of an oscillator 27. The neck ring assembly 16 comprises a neck ring 28, which is divided into four quarters, connected to four pivotally mounted arms, of which two, 29 and 30, are shown. At their ends remote from the neck ring the arms are in contact with a cam ring 31, and the neck ring assembly is relatively rotatable with respect to the cam ring, by which means the neck ring can be opened and closed. The neck ring 28 is provided with a recessed lip 32 and the entire neck ring assembly can be rotated by a rotation mechanism comprising the drive gears 33 and rotation air motor 34.

In operation, the gob deflector 11a is moved to its extended position above the blank mould 5 and a gob from the gob delivery system enters the delivery chute 11 and is delivered to the blank mould 5 via the gob deflector 11a. The gob deflector 11a is then retracted and the blank mould 5 raised by the action of the cylinder 7 until it mates and engages with a four-part neck ring (in this case 17) of one of the transport arm mechanisms (in this case 13). The plunger 8 is then lowered together with press cylinder 9, until it passes through the neck ring, and the press cylinder 9 then operates to force the plunger into the blank mould, pressing the glass gob against the internal wall 6 of the blank mould 5, and forming the glass gob into a blank or parison within the blank mould. During the pressing operation some of the glass is forced up into the neck ring and is held in the recessed lip 32 thereof. After the blank or parison has been formed, the blank mould 5 is lowered, and the plunger 8 is raised, leaving the blank or parison suspended by the neck ring 28.

As soon as the mould has disengaged, rotation of the neck ring 28 about its vertical axis is commenced by means of the drive gears 33 and rotation air motor 34. The speed of rotation can be varied and if desired rotation can be stopped for still blowing. Once the mould and plunger have become completely disengaged, the transport arm mechanism 13 is rotated, in a horizontal plane about the rotatable axle 15, until the neck ring assembly 17 is in register with the blow mould 19. This can be seen more clearly in Figure 2 in which the parison 33 is shown suspended between the two halves of the blow mould 18a and 18b. Next the blow mould is closed around the blank or parison 33 by relative lateral movement of the mould halves 18a and 18b. By closing the blow mould by relative lateral movement of the mould halves, rather than by pivotal movement, the mould halves are able to separate by a greater distance which facilitates the production of larger ware if desired. The opening and closing mechanism can also be made extremely compact.

In the next moulding step, the blow head 24 is lowered until it mates with the neck ring assembly 16. The blank or parison is then blown and at the same time the foot is formed by the foot forming cylinder 25. As will be appreciated from the above description, the parison once pressed is transferred and blown without leaving the transport arm mechanism. When the hollow glass article has cooled sufficiently, the blow mould is opened and the transport arm mechanism 13 is rotated to the eject position, illustrated by broken line 35 in Figure 1. In this position the neck ring is opened and the moulded article ejected.

In a modified operation of the apparatus, the transport arm mechanism 13 can be rotated from the press mould directly to the eject position 35, and the neck ring opened to release the press moulded parison as a finished article. This can be useful in adapting the apparatus to produce press moulded articles which do not need a blow moulding operation. Alternatively the blow mould 18 can be replaced by a system of cooling ducts so that the press moulded parison can be cooled at the blow moulding station without blow moulding and then moved to the eject position 35 for release.

It can be seen that the invention provides a highly cost effective apparatus for the production of hollow glass articles, for example, by permitting a press mould to feed two or more blow moulds. The apparatus can be of modular construction, and is thereby capable of expansion by the addition of further stations in order to increase production capacity. Several blow moulding stations can be fed from a single press moulding station until a capacity limit is reached at which point further press moulding and blow moulding stations need to be added.

## Claims

1. A glass forming apparatus (1) for the production of hollow glass articles which comprises:
a first station comprising a blank mould (5) and a plunger (8) cooperable therewith adapted to form a glass gob into a hollow blank;
a plurality of second stations each adapted to receive a hollow blank from the first station and comprising a blow mould (18) and blowing means (24) cooperable therewith to form the blank into a blow moulded glass hollow article; and
a transfer means adapted to transfer the hollow blank from the first station to one of the second stations;
characterised in that the transfer means comprises elongate arms (12,13), one for each second station, which are reciprocally rotatable, each arm having a neck means (16,17) adapted to receive the moil of a hollow glass blank (33) formed by the action of the plunger on the glass gob, the elongate arm being arranged to rotate the hollow blank about its vertical axis whilst the blank is being transferred from the first station to one of said second stations, and to hold the hollow blank by the neck means during said transfer and during blowing of the moulded glass article.

2. A glass forming apparatus according to Claim 1 which comprises:
a retractor gob deflector (11a) adapted to receive a glass gob from a gob feeder and to deflect the glass gob into the blank mould (5),
the gob deflector being retractable from a first gob deflecting position (Fig 3) in which it is situated between the blank mould and the plunger to a second position (Fig 2) in which the gob deflector does not interfere with the movement of the blank mould or the plunger in the formation of the hollow blank.

3. A glass forming apparatus according to Claim 1 or 2, wherein:
the blow mould comprises two or more mould parts (18a,b) and is adapted to open or close by relative linear movement of the two or more mould parts.

4. A glass forming apparatus according to any of Claims 1 to 3, in which the hollow glass articles comprise tableware.

5. A glass forming apparatus according to any of the preceding claims, which also comprises a gob feeder.

6. A glass forming apparatus according to any one of the preceding claims, in which the blank mould is of unitary construction and mounted for reciprocal vertical motion.

7. A glass forming apparatus according to any one of the preceding claims, in which the plunger is arranged vertically above the blank mould and mounted for reciprocal vertical motion.

8. A glass forming apparatus according to any one of the preceding claims, in which the blow mould is a paste mould.

9. A glass forming apparatus according to any one of the preceding claims, which comprises one first station, two second stations.

10. A glass forming apparatus according to any of the preceding claims, which comprises a gob deflector in the form of an elongate downwardly depending metal channel (11a) which is positioned, in gob deflecting operation, such that its lower end (11d) is substantially vertically above the open mouth of the blank mould (5).

11. A glass forming apparatus according to any of the preceding claims, in which the blank mould and the plunger are movable only in a vertical direction in normal operation.

12. A glass forming apparatus according to any of the preceding claims, which comprises a blow mould comprising two mould halves and adapted to open and close by relative linear movement of the said mould halves on linear slides (20).

13. A glass forming apparatus according to any of the preceding claims, in which the elongate arms are movable only in a horizontal plane in normal operation.

14. A glass forming apparatus according to any of the preceding claims, in which the blow moulded glass article is not released from the elongate arm of the transfer means until the arm has been rotated to an eject position.

15. A method of forming a hollow glass article in which there is used a glass forming apparatus according to any one of the preceding claims.

## Patentansprüche

1. Glasherstellungsvorrichtung (1) für die Produktion von hohlen Glasgegenständen, mit:
einer ersten Station, die eine Füllform (5) und einen mit dieser zusammenwirkenden Stempel (8) enthält, der dazu ausgestaltet ist, um einen Glaskülbel zu einem hohlen Rohling zu formen;
einer Anzahl von zweiten Stationen, die jede dazu ausgestaltet ist, einen hohlen Rohling von der ersten Station zu empfangen, und die eine Blasform (18) und mit dieser zusammenwirkende Blaseinrichtungen (24) aufweist, um den Rohling zu einem hohlen, blasgeformten Glasgegenstand zu formen; und
einer Transporteinrichtung, die dazu ausgestaltet ist, um den hohlen Rohling von der ersten Station zu einer der zweiten Stationen zu transportieren;
dadurch gekennzeichnet, daß die Transporteinrichtung längliche Arme (12, 13) aufweist, einen für jede zweite Station, die hin- und herschwenkbar sind, wobei jeder Arm eine Halseinrichtung (16, 17) hat, die dazu ausgestaltet ist, die Kappe von einem hohlen Glasrohling (33) aufzunehmen, der durch die Wirkung des Stempels auf den Glaskülbel gebildet ist, wobei der längliche Arm dazu ausgestaltet ist, den hohlen Rohling um seine vertikale Achse zu drehen, wobei der Rohling von der ersten Station zu einer der zweiten Stationen transportiert wird, und den hohlen Rohling mittels der Halseinrichtung während des Transports und während des Blasens des geformten Glasgegenstandes zu halten.

2. Glasherstellungsvorrichtung nach Anspruch 1, mit:
einer Rückzieh-Külbel-Ablenkeinrichtung (11a), die dazu ausgestaltet ist, einen Glaskülbel von einer Külbel-Zuführeinrichtung zu empfangen und den Glaskülbel in die Füllform (5) abzulenken,
wobei die Külbel-Ablenkeinrichtung von einer ersten Külbel-Ablenkposition (Figur 3), in der sie zwischen der Füllform und dem Stempel angeordnet ist, in eine zweite Position (Figur 2) zurückziehbar ist, in der die Külbel-Ablenkeinrichtung bei der Herstellung des hohlen Rohlings nicht mit der Bewegung der Füllform oder des Stempels in Eingriff kommt.

3. Glasherstellungsvorrichtung nach Anspruch 1 oder 2, bei der:
die Blasform zwei oder mehrere Formteile (18a, b) enthält und dazu ausgestaltet ist, durch eine relative Linearbewegung der beiden oder mehreren Formteile geöffnet oder geschlossen zu werden.

4. Glasherstellungsvorrichtung nach einem der Ansprüche 1 bis 3, bei dem die hohlen Glasgegenstände Tafelgeschirr umfassen.

5. Glasherstellungsvorrichtung nach einem der vorhergehenden Ansprüche, die außerdem einen Külbel-Zuführeinrichtung aufweist.

6. Glasherstellungsvorrichtung nach einem der vorhergehenden Ansprüche, bei dem die Füllform eine einteilige Konstruktion hat und für eine vertikale Hin- und Herbewegung montiert ist.

7. Glasherstellungsvorrichtung nach einem der vorhergehenden Ansprüche, bei dem der Stempel vertikal über der Füllform angeordnet und für eine vertikale Hin- und Herbewegung montiert ist.

8. Glasherstellungsvorrichtung nach einem der vorhergehenden Ansprüche, bei der die Blasform eine gepastete Form ist.

9. Glasherstellungsvorrichtung nach einem der vorhergehenden Ansprüche, die eine erste Station und zwei zweite Stationen enthält.

10. Glasherstellungsvorrichtung nach einem der vorhergehenden Ansprüche, die eine Külbel-Ablenkeinrichtung in der Form eines länglichen, nach unten herabhängenden Metallkanals (11a) aufweist, der in einem Külbel ablenkenden Betrieb so angeordnet ist, daß dessen unteres Ende (11d) sich im wesentlichen vertikal über der offenen Mundöffnung der Füllform (5) befindet.

11. Glasherstellungsvorrichtung nach einem der vorhergehenden Ansprüche, bei der die Füllform und der Stempel im normalen Betrieb lediglich in vertikaler Richtung bewegbar sind.

12. Glasherstellungsvorrichtung nach einem der vorhergehenden Ansprüche, die eine Blasform enthält, die zwei Formhälften aufweist und dazu ausgestaltet ist, durch eine relative Linearbewegung der beiden Formhälften entlang linearer Schlitten (20) geöffnet und geschlossen zu werden.

13. Glasherstellungsvorrichtung nach einem der vorhergehenden Ansprüche, bei der die länglichen Arme bei normalem Betrieb lediglich in einer horizontalen Ebene bewegbar sind.

14. Glasherstellungsvorrichtung nach einem der vorhergehenden Ansprüche, bei dem der blasgeformte Glasgegenstand nicht von dem länglichen Arm der Transporteinrichtung freigegeben wird, bis der Arm in eine Abgabeposition gedreht ist.

15. Verfahren zum Herstellen eines hohlen Glasgegenstandes, bei dem eine Glasherstellungsvorrichtung nach einem der vorhergehenden Ansprüche verwendet wird.

## Revendications

1. Machine à mouler le verre pour la production d'articles en verre creux qui comprend :
une première station comprenant un moule ébaucheur (5) et un plongeur (8) pouvant coopérer entre eux, adaptée pour transformer une paraison de verre en une ébauche creuse ;
une pluralité de deuxièmes stations, dont chacune est adaptée pour recevoir une ébauche creuse provenant de la première station et comprend un moule finisseur (18) et des moyens de soufflage (24) qui peuvent coopérer avec ce moule pour transformer l'ébauche en un article en verre creux moulé par soufflage ; et
des moyens de transfert adaptés pour transférer l'ébauche creuse de la première station à une deuxième station ;
caractérisée en ce que les moyens de transfert comprennent des bras allongés (12, 13), un pour chaque deuxième station, qui sont entraînés en rotation alternative, chaque bras ayant des moyens de col (16, 17) adaptés pour recevoir la calotte d'une ébauche en verre creuse (33) formée par l'action du plongeur sur la paraison de verre, le bras allongé étant agencé pour faire tourner l'ébauche creuse autour de son axe vertical pendant que l'ébauche est en cours de transfert de la première station à une desdites deuxièmes stations, et pour tenir l'ébauche creuse à l'aide des moyens de col pendant ledit transfert et pendant le soufflage de l'article en verre moulé.

2. Machine à mouler le verre selon la revendication 1, qui comprend :
un déflecteur de paraisons rétractable (11a) qui est adapté pour recevoir une paraison de verre provenant d'un distributeur de paraisons et pour dévier la paraison de verre vers le moule ébaucheur,
le déflecteur de paraisons pouvant être rétracté d'une première position de déviation des paraisons (Fig. 3), dans laquelle il est situé entre le moule ébaucheur et le plongeur, à une deuxième position (Fig. 2) dans laquelle le déflecteur de paraisons n'interfère pas avec le mouvement du moule ébaucheur ni du plongeur dans la formation de l'ébauche creuse.

3. Machine à mouler le verre selon la revendication 1 ou 2, dans lequel :
le moule finisseur comprend deux ou plus de deux parties de moule (18a, b) et est adapté pour s'ouvrir ou se fermer par un mouvement relatif linéaire des deux ou plus de deux parties de moule.

4. Machine à mouler le verre selon une quelconque des revendications 1 à 3, dans laquelle les articles en verre creux comprennent des pièces de verrerie de table.

5. Machine à mouler le verre selon une quelconque des revendications précédentes, qui comprend aussi un distributeur de paraisons.

6. Machine à mouler le verre selon une quelconque des revendications précédentes, dans laquelle le moule ébaucheur est d'une construction unitaire et est monté pour décrire un mouvement vertical alternatif.

7. Machine à mouler le verre selon une quelconque des revendications précédentes, dans laquelle le plongeur est agencé à la verticale au-dessus du moule ébaucheur et est monté pour décrire un mouvement vertical alternatif.

8. Machine à mouler le verre selon une quelconque des revendications précédentes, dans laquelle le moule finisseur peut être un moule pour moulé-tourné.

9. Machine à mouler le verre selon une quelconque des revendications précédentes, qui comprend une première station, et deux deuxièmes stations.

10. Machine à mouler le verre selon une quelconque des revendication précédentes, qui comprend un déflecteur de paraisons sous la forme d'un canal métallique allongé dirigé vers le bas qui est positionné, dans l'opération de déviation des paraisons, de telle manière que son extrémité inférieure (11d) soit pratiquement à la verticale au-dessus de la bouche ouverte du moule ébaucheur (5).

11. Machine à mouler le verre selon une quelconque des revendications précédentes, dans laquelle le moule ébaucheur et le plongeur ne peuvent se déplacer que dans une direction verticale en fonctionnement normal.

12. Machine à mouler le verre selon une quelconque des revendications précédentes, qui comprend un moule finisseur comprenant deux demi-moules et adapté pour s'ouvrir et se fermer par un mouvement relatif linéaire desdits demi-moules sur des glissières linéaires (20).

13. Machine à mouler le verre selon une quelconque des revendications précédentes, dans laquelle les bras allongés ne peuvent se déplacer que dans un plan horizontal en fonctionnement normal.

14. Machine à mouler le verre selon une quelconque des revendications précédentes, dans laquelle l'article en verre moulé par soufflage n'est pas dégagé du bras allongé des moyens de transfert avant que le bras ait été amené à une position d'éjection par rotation.

15. Procédé de moulage d'un article en verre creux, dans lequel on utilise une machine à mouler le verre selon une quelconque des revendications précédentes.
